(19) Europäisches Patentamt
European Patent Office
Office européen des brevets

(11) EP 2 909 152 B1

(12) **EUROPEAN PATENT SPECIFICATION**

(45) Date of publication and mention of the grant of the patent:
**23.09.2020 Bulletin 2020/39**

(21) Application number: **13814731.9**

(22) Date of filing: **11.12.2013**

(51) Int Cl.:
***C04B 28/04*** (2006.01) ***C04B 40/00*** (2006.01)

(86) International application number:
**PCT/US2013/074253**

(87) International publication number:
**WO 2014/093420 (19.06.2014 Gazette 2014/25)**

(54) **ADDITIVE FOR HYDRAULICALLY SETTING MIXTURES**

ZUSATZMITTEL FÜR HYDRAULISCH ABBINDENDE MISCHUNGEN

ADDITIF POUR DES MÉLANGES À PRISE HYDRAULIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2012 US 201261737302 P**

(43) Date of publication of application:
**26.08.2015 Bulletin 2015/35**

(73) Proprietor: **Dow Global Technologies LLC**
**Midland, MI 48674 (US)**

(72) Inventors:
- **KIESEWETTER, Rene**
  **29649 Wietzendorf (DE)**
- **KUEHN, Hartmut**
  **06116 Halle (DE)**
- **OESTMANN, Joerg**
  **29699 Bomlitz (DE)**

(74) Representative: **Houghton, Mark Phillip et al**
**Patent Outsourcing Limited**
**1 King Street**
**Bakewell, Derbyshire DE45 1DZ (GB)**

(56) References cited:
**EP-A2- 1 184 406**
**WO-A2-2012/079095**
**US-A- 5 358 998**
**US-A- 5 777 003**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 909 152 B1

## Description

The present invention relates to hydraulic setting mixtures with improved mechanical properties. In particular, the present invention relates to a composition which, when incorporated within a hydraulic setting mixture, provides an increase in adhesive, flexural and/or compressive strength. Also provided is a process for producing such compositions, a dry mortar formulation comprising a hydraulic binder and such a composition, a hydraulic setting mixture comprising such a dry mortar formulation and water, and a method of modifying a conventional hydraulic binder-containing dry mortar formulation. Further, the use of such a composition to increase, once cured, the adhesive, flexural and/or compressive strength of a dry mortar formulation comprising hydraulic binder is also provided.

## Background

Hydraulic setting mixtures are widely used in the construction industry. For example, they can be used as adhesive compositions, in particular tile adhesive compositions, which strongly hold two surfaces together once the setting process has completed. Other applications of such hydraulic setting mixtures include concrete (a mixture comprising cement, sand and stone which, upon combination with water, solidifies and hardens), cementitious adhesives or reinforcement coats for exterior insulation finishing systems (EIFS) and/or External Thermal Insulation Composite Systems (ETICS), grouts and self-levelling underlays (SLUs).

Hydraulic setting mixtures are generally prepared at the point of use by combining hydraulic mortars, i.e. dry mixtures typically comprising not less than 0.5 weight percent hydraulic binder, based on the total dry weight of the mortar, with an amount of water sufficient to enable the application of the resultant cement composition to a surface prior to it setting and hardening upon drying.

Conventional hydraulic compositions often comprise a combination of hydraulic binder, e.g. cement, and one or more additives, such as sand, lime, dispersants, thickeners and plasticizers, which provide a modified hydraulic composition with improved physical characteristics. In particular, the use of fine aggregate materials such as silica sand is well known. Further, water retention agents and/or polymer binders, which can be in the form of a latex or a redispersible polymer powder (RDP), may be utilized to impart beneficial effects upon the physical characteristics of the hydraulic composition and/or the resultant hardened product, which are highly dependent upon both the initial hydration process and the subsequent water removal as the composition sets and hardens upon drying. For example, the incorporation of such additives may modify open time, setting rate and drying time.

The use of RDPs is advantageous over the use of latex binders because RDPs combine the performance of liquid latex binders with the convenience, reliability and storage advantages of a one-component system. Conventional RDPs suitable for use in hydraulic compositions include those disclosed in US-A-20070037925, which provides a RDP which is suitable for use as an accelerating additive in hydraulic compositions; and US-A-20070129486, which provides an RDP comprising a styrene butadiene copolymer for use in heat insulating composite systems. Further, U.S. Patent No. 5,959,017 provides RDPs which are produced by combining (blending) an aqueous polymer dispersion with a liquid modifier, e.g. nonylphenol polygycol ether (Arkopal™ N 060), which has been combined with a pulverulent carrier material powder.

EP1184406 discloses a method for the production of polymer powder (PP) by evaporating aqueous dispersions of film-forming polymers (P) in presence of salts of oligomeric arylsulfonic acid-formaldehyde condensates (drying agent), in which the dispersion before evaporation contains at least 1.5 wt% (based on P) anionic surfactant(s) (AO) with at least one 6-32C alkyl group.

Conventional hydraulic setting compositions can, by the incorporation of a retarding agent, achieve a long open time. However, use of such retarders also leads to a significant delay in hydraulic setting kinetics. Such impact on setting brings economic drawbacks as a result of delays in the construction progress. Further, other disadvantages associated with such conventional compositions include low adhesion strengths upon setting of the hydraulic setting composition. Accordingly, there remains a desire to increase the adhesion strength of hydraulic setting compositions.

It has been surprisingly found that a specific surfactant, when added in a small amount to a standard dry mortar formulation, results in an increase in the adhesive, flexural and/or compressive strength following curing of the dry mortar formulation. Further, it has been shown that such small amounts of this surfactant can be effectively incorporated into conventional dry mortar formulations via combination with a conventional water redispersible polymer powder (RDP) prior to combination of the resultant mixture with a standard dry mortar formulation.

## Statement of the Invention

The present invention in its various aspects is as set out in the accompanying claims.

According to a first aspect, the present invention provides a hydraulic binder-free composition for use as a modifying additive in a hydraulic setting mixture, said composition comprising: one or more water redispersible polymer

powder (RDP); and one or more surfactants chosen from a dioctyl sulfosuccinate salt; wherein the weight ratio of RDP to said surfactant(s) is from 99:1 to 9999:1.

2. The composition according to the first aspect of the present invention, wherein said RDP comprises one or more compounds selected from homopolymers, copolymers and/or terpolymers of one or more monomers selected from the group of vinyl esters of unbranched or branched $C_{1-15}$ alkycarboxylic acids, (meth)acrylic esters of $C_{1-15}$ alcohols, vinylaromatics, olefins, dienes and vinyl halogenides.

3. The composition according to any of the first aspect or claim 2 of the present invention, above, further comprising one or more stabilizers selected from lime, air entraining agents, coalescents, superplasticizers, rheological modifiers and mixtures thereof.

According to a second aspect, the present invention provides a process for producing the composition of the first aspect of the present invention, said process comprising: a) providing one or more RDP; b) providing a composition comprising one or more surfactants chosen from a dioctyl sulfosuccinate salt; and c) combining an amount of the composition of step a) with an amount of the composition of step b) such that the weight ratio of said RDP to said surfactants is from 99:1 to 9999:1.

According to a third aspect, the present invention provides a process for producing a RDP for use as a modifying additive in a hydraulic setting mixture, said process comprising drying an aqueous composition comprising a dispersion of an emulsion polymer, wherein said aqueous composition further comprises one or more surfactants chosen from a dioctyl sulfosuccinate salt in an amount such that the weight ratio of emulsion polymer to said surfactants is from 99:1 to 9999:1.

According to a fourth aspect, the present invention provides a modified dry mortar formulation which may be combined with water to form a hydraulic setting mixture, wherein said modified dry mortar comprises: a) a dry mortar formulation comprising hydraulic binder; and b) from 0.3. to 50%, based on the total dry weight of the modified dry mortar formulation, of the hydraulic binder free-composition according to the first aspect of the present invention, wherein said modified dry mortar formulation comprises no more than 1%, based on the total dry weight of the modified dry mortar formulation, of surfactants according to Formula (I) as defined above.

8. The formulation of the fourth aspect of the present invention, which is a grout, cement-based tile adhesive (CBTA) or a cementitious adhesive or coating formulation for an Exterior Insulation Finishing System (EIFS) and/or an External Thermal Insulation Composite System (ETICS).

9. The formulation of any of the fourth aspect or claim 8 of the present invention, above, further comprising one or more water soluble polysaccharide-derived water retention agents, preferably a water soluble cellulose ether.

10. A hydraulic setting mixture comprising a dry mortar formulation according to any of the fourth aspect or claim 9, above, and water.

According to a fifth aspect, the present invention provides a hydraulic setting mixture comprising the dry mortar formulation of the fourth aspect of the present invention and water.

According to a sixth aspect, the present invention provides a method for modifying a dry mortar formulation, said method comprising: a) providing a standard dry mortar formulation comprising hydraulic binder; b) providing a composition according to the first aspect of the present invention; and c) combining the composition of step b) with the formulation of step a) to provide a modified dry mortar comprising from 0.3 to 50%, based on the total dry weight of the modified hydraulic mortar formulation, of the composition according to the first aspect of the present invention, provided that the resultant modified dry mortar formulation comprises no more than 1%, based on the total dry weight of the modified dry mortar formulation, of surfactants according to Formula 1 as defined above.

According to a seventh aspect, the present invention provides use of the composition of the first aspect of the present invention as a modifying additive for a hydraulic binder-containing dry mortar formulation or a hydraulic setting mixture comprising such a dry mortar formulation.

According to an eighth aspect, the present invention provides use of the composition of the first aspect of the present invention to increase, once cured, the adhesive, flexural and/or compressive strength of a dry mortar formulation comprising hydraulic binder.

12. Use of the composition according to any of the first aspect of the present inventon or claims 2 or 3, above, as a modifying additive for a hydraulic binder-containing dry mortar formulation or a hydraulic setting mixture comprising such a dry mortar formulation.

13. Use of a composition according to any of the first aspect of the present invention or claim 2 or 3, above, for increasing, once cured, the adhesive, flexural and/or compressive strength of a dry mortar formulation comprising hydraulic binder.

Hydraulic setting mixtures prepared according to the present invention demonstrate an increase in adhesive, flexural and/or compressive strength following curing of the dry mortar formulation.

**Detailed Description of the Invention**

Throughout the specification, any reference to "percent" or "percent weight" is expressed in terms of dry weight of the composition, formulation or mixture unless otherwise specified.

"EN" stands for European Norm and designates a test method as a prefix to the test method number. The test method is the most current test method as of the priority date of this application.

As used herein, the term "hydraulic setting mixture" means a composition used in the construction field comprising a hydraulic binder, filler(s), water retention agent(s), and, optionally, polymer containing additives such as a polymer dispersion and/or a redispersible polymer powder.

As used herein, the term "water soluble" refers to any compound which is soluble in water at 20°C.

As used herein, the term "hydraulic binder" refers to a mineral composition, normally of finely ground materials, which upon addition of an appropriate quantity of water forms a binding paste or slurry capable of hardening of hydration in air as well as under water and binds together the granulates.

Disclosed but not claimed are hydraulic binder-free compositions comprising one or more surfactants according to Formula I

$$MSO_3\text{-}R^1\text{-}(\text{-}COOR^2)_n \qquad \text{Formula (I)}$$

wherein M represents a hydrogen, metal or ammonium cation, preferably a metal cation, more preferably sodium; $R^1$ represents a linear or branched, saturated or unsaturated $C_{1\text{-}10}$, preferably a $C_{2\text{-}4}$, alkylene moiety, which is optionally substituted with one or more hydroxyl, halogen, nitro and/or cyano groups; each $R^2$ independently represents a linear or branched, saturated or unsaturated $C_{1\text{-}22}$, preferably $C_{2\text{-}8}$, alkyl radical or a hydrogen, metal or ammonium cation, preferably a linear or branched, saturated or unsaturated $C_{1\text{-}22}$, more preferably $C_{2\text{-}8}$, alkyl radical; and n represents an integer from 1 to 10, preferably an integer from 1 to 5.

More preferably, in Formula I n represents 2 and, still more preferably, the surfactant is a compound according to Formula (II) or Formula (III)

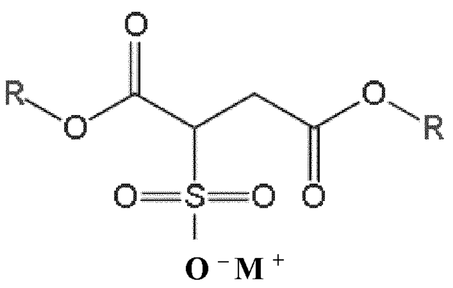

Formula (II)

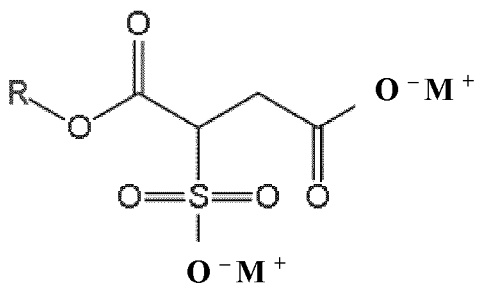

Formula (III)

The surfactant according to the invention is a dioctyl sulfosuccinate salt. Still more preferably, the surfactant is a dioctyl sulfosuccinate salt, most preferably sodium dioctyl sulfosuccinate, i.e. sodium 1,4-bis(2-ethylhexoxy)-1,4-dioxobutane-2-sulfonate and combinations thereof.

The hydraulic binder-free composition of the present invention also comprises one or more redispersible polymer powder (RDP). A wide variety of RDPs, which may be made by spray drying an emulsion polymer in the presence of various additives such as a protective colloid and anti-caking agent, are well known in the art and are available from commercial sources, and all of which are believed to be suitable for use in the present invention. Preferably, the RDP used in the present invention comprises one or more compounds selected from homopolymers and/or copolymers and/or terpolymers of one or monomers selected from the group of vinyl esters of unbranched or branched $C_1$-$C_{15}$-alkycarboxylic acids, (meth)acrylic ester of $C_1$-$C_{15}$-alcohols, vinylaromatics, olefins, dienes, and vinyl halogenides. Preferably, the RDP comprises a homopolymer or a copolymer selected from vinyl acetate homopolymers, copolymers of vinyl acetate with

ethylene, copolymers of vinyl acetate with ethylene and one or more further vinyl esters, copolymers of vinyl acetate with ethylene and acrylic esters, copolymers of vinyl acetate with ethylene and vinyl chloride, styrene-acrylic ester copolymers, styrene-1,3-butadiene copolymers and combinations thereof.

In more preferred embodiments, the RDP comprises a homopolymer or copolymer selected from: vinyl acetate homopolymers; copolymers of vinyl acetate with from 1 to 40% by weight of ethylene; copolymers of vinyl acetate with from 1 to 40% by weight of ethylene and from 1 to 50% by weight of one or more further comonomers selected from the group consisting of vinyl esters having from 1 to 12 carbon atoms in the carboxylic acid radical, e.g. vinyl propionate, vinyl laurate, vinyl esters of a-branched carboxylic acids having from 9 to 13 carbon atoms, e.g. VeoVa9®, VeoVa10®, VeoVa11®; copolymers of vinyl acetate, from 1 to 40% by weight of ethylene and preferably from 1 to 60% by weight of acrylic esters of unbranched or branched alcohols having from 1 to 15 carbon atoms, in particular n-butyl acrylate or 2-ethylhexyl acrylate; and copolymers comprising from 30 to 75% by weight of vinyl acetate, from 1 to 30% by weight of vinyl laurate or vinyl esters of an a-branched carboxylic acid having from 9 to 11 carbon atoms and also from 1 to 30% by weight of acrylic esters of unbranched or branched alcohols having from 1 to 15 carbon atoms, in particular n-butyl acrylate or 2-ethylhexyl acrylate, and additionally containing from 1 to 40% by weight of ethylene: copolymers comprising vinyl acetate, from 1 to 40% by weight of ethylene and from 1 to 60% by weight of vinyl chloride; where the auxiliary monomers mentioned may also be present in the polymers in the specified amounts and the percentages by weight in each case add up to 100% by weight.

In alternative, equally preferred embodiments, the RDP comprises a homopolymer or copolymer selected from: (meth)acrylic ester polymers such as copolymers of n-butyl acrylate or 2-ethylhexyl acrylate or copolymers of methyl methacrylate with n-butyl acrylate and/or 2-ethylhexyl acrylate; styrene-acrylic ester copolymers comprising one or more monomers from the group consisting of methyl acrylate, ethyl acrylate, propyl acrylate, n-butyl acrylate, 2-ethylhexyl acrylate; vinyl acetate-acrylic ester copolymers comprising one or more monomers from the group consisting of methyl acrylate, ethyl acrylate, propyl acrylate, n-butyl acrylate, 2-ethylhexyl acrylate and, if desired, ethylene; styrene-1,3-butadience copolymer; where the auxiliary monomers mentioned may also be present in the polymers in the specified amounts and the percentages by weight in each case add up to 100% by weight.

In particularly preferred embodiments, the RDP is a homopolymer, copolymer or terpolymer of one or more monomers selected from the group consisting of styrene, butadiene, vinyl acetate, versatate, propionate, laurate, vinyl chloride, vinylidene chloride, ethylene, and acrylates, e.g., ethylene/vinylacetate copolymer (vinyl ester-ethylene copolymer), vinylacetate/ vinyl-versatate copolymer, and styrene/acrylic copolymer. Still more preferably, the RDP is a copolymer based on vinyl acetate-ethylene, such as DLP 2000 (available from Dow Wolff Cellulosics, Germany).

The monomers and the proportions by weight of the comonomers are chosen so that, in general, a glass transition temperature T of from -50°C. to +50°C., preferably from -30°C. to +40°C., results. The glass transition temperature calculated using the Fox equation [Bulletin of the American Physical Society 1, 3 Page 123 (1956)] as follows:

$$1/T_g = w_1/T_{g(1)} + w_2/T_{g(2)}$$

For a copolymer, $w_1$ and $w_2$ refer to the weight fraction of the two monomers, based on the weight of monomers charged in the reaction vessel, and $T_{g(1)}$ and $T_{g(2)}$ refer to the glass transition temperatures of the two corresponding homopolymers in degrees Kelvin. For polymers containing three or more monomers, additional terms ($w_n/T_{g(n)}$) are added. The glass transition temperatures of the homopolymers for the purpose of this invention are those reported in "Polymer Handbook", edited by J. Brandrup and E. H. Immergut, Interscience Publishers, 1966, unless that publication does not report the $T_g$ of a particular homopolymer, in which case the $T_g$ of the homopolymer is measured by differential scanning colorimetry (DSC). To measure the glass transition temperature of a homopolymer by DSC, the homopolymer sample is prepared and maintained in the absence of ammonia or primary amine. The homopolymer sample is dried, preheated to 120°C, rapidly cooled to -100°C, and then heated to 150°C, at a rate of 20°C/minute while data is collected. The glass transition temperature for the homopolymer is measured at the midpoint of the inflection using the half-height method.

Water-redispersible polymer powders are produced by spray-drying techniques of water-based dispersions based on the above mentioned homopolymers and/or copolymers. The water-redispersible polymer powder may comprise one or more compounds selected from protective colloids and anticaking agents. EP1498446A1 discloses methods and examples of producing such water-redispersible polymer powders.

In the hydraulic binder-free composition of the present invention, the weight ratio of said RDP to said surfactant(s) is from 99:1 to 9999:1. Within this range, the maximum amount of said RDP relative to said surfactant(s) is preferably 4999:1, more preferably 1999:1, still more preferably 4997:3, and most preferably 999:1.

The hydraulic binder-free compositions may further comprise additional components. For example, for applications in which the hydraulic mixture should have good workability (e.g. tile adhesives), the hydraulic binder-free

composition preferably includes one or more stabilizers selected from lime, air entraining agents (the presence of which lead to air filled voids in hydraulic mixtures), coalescents, superplasticizers, rheological modifiers and mixtures thereof. In particularly preferred embodiments, the stabilizer is an air entraining agent. Preferably, the air entraining agent is an alkylpolyglucoside (APG), fatty alcohol sulfate, fatty alcohol ether sulfate, alkylpolyglycolether, fatty alcohol ethoxylate or combinations thereof. More preferably, the stabilizer is a fatty alcohol ether sulfate such as sodium lauryl sulphate (available commercially as a powder with 99% active content from BASF, Germany as Loxanol™ K 12 P. In embodiments in which the hydraulic binder-free composition includes such a stabilizer, it is preferred that the weight ratio of said RDP to said stabilizer(s) is from 19:1 to 999:10, preferably from 497:3 to 499:1.

According to the second aspect, the hydraulic binder-free compositions are prepared by a process in which an RDP is combined with a composition comprising one or more surfactants which are chosen from a dioctyl sulfosuccinate salt to provide a RDP-surfactant mixture in which the weight ratio of said surfactant(s) to said RDP is from 99:1 to 9999:1. Preferably, the maximum amount of said RDP relative to said surfactant(s) is preferably 4999:1, more preferably 1999:1, still more preferably 4997:3, and most preferably 999:1.

The surfactant-containing composition may be provided as a liquid, e.g. aqueous composition, or as a solid, e.g. a powder. Preferably, the surfactant is provided as a solid. When the surfactant is provided as a solid composition, the hydraulic binder-free composition may be prepared by blending the RDP with the surfactant-containing composition.

When the surfactant is provided as a liquid composition, the hydraulic binder-free composition is prepared by drying the RDP-surfactant mixture by any conventional means such as, for example, spray drying. Preferably, the hydraulic binder-free compositions are prepared by a process comprising:

(1) providing an RDP composition;
(2) spraying an aqueous solution comprising the surfactant according to Formula I onto said RDP; and
(3) spray drying the mixture obtained in step (2).

According to the third aspect, the hydraulic binder-free composition of the first aspect is prepared at the same time as the RDP is formed. Such a process comprises drying an aqueous composition comprising a dispersion of a water insoluble film forming emulsion polymer and, optionally, a conventional colloidal stabilizer and/or a conventional anti-caking agent, wherein said aqueous composition further comprises one or more surfactants according to formula I as defined above in an amount such that the weight ratio of said emulsion polymer to said surfactant(s) is from 99:1 to 9999:1. Preferably, the maximum amount of said emulsion polymer relative to said surfactant(s) is 4999:1, more preferably 1999:1, still more preferably 4997:3, and most preferably 999:1.

According to a fourth aspect, the present invention provides a modified dry mortar formulation which may be combined with water to form a hydraulic setting mixture, wherein the hydraulic mortar comprises a standard dry mortar formulation comprising one or more hydraulic binders and from 0.3 to 50% based on the total dry weight of the modified dry mortar formulation, of a hydraulic binder-free composition of the first aspect of the present invention. Preferably, the composition of the first aspect is present in an amount of at least 0.5%, more preferably, at least 1.0% and still more preferably at least 2.5%. At the same time, it is preferred that the modified dry mortar comprises no more than 30%, more preferably no more than 15%, and still more preferably no more than 5% of the composition of the first aspect.

Although any conventional hydraulic binder may be used in such dry mortars, it is preferred that the hydraulic binder is cement. More preferably, the hydraulic binder is Portland cement, in particular, the types of CEM I, II, III, IV and V, and/or alumina cement (aluminate cement) and combinations thereof. Preferably, the mortar comprises hydraulic binder in an amount not less than 10 weight percent, more preferably not less than 20 weight percent, and even more preferably not less than 30 weight percent. At the same time, it is preferred that the mortar comprises no more than 60 weight percent, more preferably no more than 50 weight percent and even more preferably no more than 40 weight percent hydraulic binder.

The modified dry mortar formulations comprise no more than 1%, preferably no more than 0.9%, even more preferably no more than 0.8%, based on the total dry weight of the formulation, of surfactant(s) according to Formula I because it is believed that, at concentrations above this level, the observed improvement in adhesive, flexural and/or compressive strength is reduced or even lost. Furthermore, the addition of such surfactants in amounts above this level may have a significant detrimental effect upon the setting kinetics of the dry mortar formulations upon combination with water to such an extent that the final composition will not set to a satisfactory standard or within an acceptable timescale. Indeed, in order to reduce and/or eliminate any potential detrimental effect upon the setting kinetics of the hydraulic compositions, it is preferred that the dry mortar formulation comprises the hydraulic binder-free composition in an amount such that the dry mortar formulation comprises no more than 0.5%, more preferably no more than 0.1%, and still more preferably no more than 0.05%, based on the total dry weight of the formulation, of surfactant(s) according to Formula I. At the same time it is preferred that the dry mortar formulations comprise at least 0.00001%, more preferably at least 0.0001% and still more preferably at least 0.001%, based on the total dry weight of the formulation, of surfactant(s) according to Formula I.

Although the amount used will vary depending upon intended use, it is preferred that the dry mortar formulation comprises the hydraulic binder-free composition in an amount sufficient that the formulation contains from 0.5 to 30 percent, based on the total weight of the dry mortar, of the RDP. The incorporation of such RDPs is common in the art and is known to impart a beneficial effect upon the physical characteristics of hydraulic compositions. For example, by incorporating such RDPs, the skilled artisan can, depending on the RDP and addition rate, modify, amongst other things, the adhesive properties, mortar deformability, flexural strength and abrasion resistance. By incorporating the hydraulic binder-free composition in such an amount within a dry mortar formulation, the requirement for additional conventional RDP additives may be reduced or eliminated.

Preferably, the dry mortar further comprises one or more fillers. In such embodiments, it is preferred that the fillers are aggregate materials having a particle size of no more than 1.0mm. Preferably, the aggregate materials are selected from silica sand, quartz sand, dolomite, limestone, perlite, expanded polystyrene, hollow glass spheres, rubber crumbs, fly ash and combinations thereof. More preferably, the aggregate material is a silica sand. In embodiments in which one or more fillers are included within the hydraulic mortar, it is preferred that the mortar comprises at least 1 weight percent, more preferably at least 20 weight percent, and still more preferably at least 40 weight percent of such material. At the same time, it is preferred that the mortar comprises no more than 85 weight percent, more preferably no more than 70 weight percent and most preferably no more than 65 weight percent of such material.

Preferably, the hydraulic mortar further comprises one or more water retention agents, preferably a water soluble, polysaccharide-derived water retention agent. Such water retention agents include water soluble cellulose ethers, starch ethers, bacterial capsular polysaccharides (which include xanthan gum, dextran, welan gum, gellan gum, diutan gum and pullulan), other naturally occurring polysaccharides such as alginates and carrageenan, and mixtures thereof. More preferably, the water retention agent is a water soluble cellulose ether such as hydroxyethylmethylcellulose (HEMC) or hydroxypropylmethylcellulose (HPMC). Such water retention agents are preferably included in an amount from 0.1 to 2.0%, more preferably from 0.1 to 2.0%, based on the total dry weight of the mortar formulation and act both as a water retention aid and as rheological modifier (thickener).

The dry mortar formulation may further comprise one or more conventional redispersible polymer powder (RDP) binders. EN 12004 and EN 12002 give performance standards regarding a hydraulic setting adhesive containing a polymeric binder. When such polymeric binders are present, the hydraulic mortar preferably comprises at least 0.3% weight percent, preferably at least 0.5% weight percent, and more preferably at least 1.5 weight percent polymeric binder, based on the total dry weight of the hydraulic mortar. At the same time, it is preferred that the mortar comprises no more than 50 weight percent, more preferably no more than 10 weight percent and even more preferably no more than 5 weight percent polymeric binder(s).

The hydraulic mortar optionally contains further additives selected from organic or inorganic thickening agents and/or secondary water retention agents, anti-sag agents, air entraining agents/coalescents, wetting agents, defoamers, superplasticizers, dispersants, calcium complexing agents, retarders, accelerators, water repellents, biopolymers and fibres, all of which are well known in the art and are available from commercial sources. Preferably, when included in the hydraulic mortars, such additives are present in amounts from 0.001 to 5 weight percent, based on the total dry weight of the hydraulic mortar.

According to a Fifth aspect, the present invention provides a hydraulic setting mixture comprising a hydraulic mortar according to the fourth aspect of the present invention and water. The hydraulic setting mixture can be prepared according to conventional methods, such as those of EN 1346 and EN 1348. Preferably, the dry ingredients such as the hydraulic mortar and the composition of the first aspect of the present invention are homogenously mixed before any liquid ingredients such as water and, if required, a liquid binder such as a polymer dispersion are added.

A polymer dispersion is a two phase system comprising finely dispersed polymeric particles in solvent, such as water. The polymer dispersion normally comprises polymeric particles as a polymeric binder, such as vinyl polymer or polyacrylic ester copolymer, and a surfactant containing hydrophobic and hydrophilic moieties. The finely dispersed polymer particles will coalesce and form a polymer film upon the evaporation of water.

According to a sixth aspect, a method for modifying a dry mortar formulation is provided. This method comprises: providing a standard dry mortar formulation comprising a hydraulic binder; providing a composition according to the first aspect of the invention; and combining the composition of the first aspect of the invention with the standard dry mortar formulation to provide a modified dry mortar formulation comprising from 0.3 to 50%, based on the total dry weight of the modified hydraulic mortar formulation, of the composition of the first aspect of the invention, provided that the resultant modified dry mortar formulation comprises no more than 1%, based on the total dry weight of the modified dry mortar formulation, of surfactants according to Formula 1 as described above. Preferably, the modified dry mortar formulation comprises at least 0.5%, more preferably, at least 1.0% and still more preferably at least 2.5% of the composition of the first aspect of the invention. At the same time, it is preferred that the modified dry mortar comprises no more than 30%, more preferably no more than 15%, and still more preferably no more than 5% of the composition of the first aspect. It is also preferred that the composition of the first aspect of the invention should be combined with the standard dry mortar formulation comprising hydraulic binder in an amount such that the modified dry mortar formulation will comprise no

more 0.9%, even more preferably no more than 0.8%, based on the total dry weight of the formulation, of surfactant(s) according to Formula I. Further, to reduce and/or eliminate any potential detrimental effect upon the setting kinetics of the hydraulic compositions, it is preferred that the dry mortar formulation comprises the hydraulic binder-free composition in an amount such that the dry mortar formulation comprises no more than 0.5%, more preferably no more than 0.1%, and still more preferably no more than 0.05%, based on the total dry weight of the formulation, of surfactant(s) according to Formula I. At the same time it is preferred that the dry mortar formulations comprise at least 0.00001%, more preferably at least 0.0001% and still more preferably at least 0.001%, based on the total dry weight of the formulation, of surfactant(s) according to Formula I.

According to a seventh and eighth aspect respectively, the composition of the first aspect is used i) as a modifying additive for a hydraulic binder-containing dry mortar formulation or a hydraulic setting mixture comprising such a dry mortar formulation; and ii) for increasing, once cured, the adhesive, flexural and/or compressive strength of a dry mortar formulation comprising hydraulic binder. In each of these aspects, the composition of the first aspect of the invention should be combined with a standard dry mortar formulation comprising hydraulic binder in an amount such that the modified dry mortar formulation will comprise no more than 1%, preferably no more than 0.9%, even more preferably no more than 0.8%, based on the total dry weight of the formulation, of surfactant(s) according to Formula I. To reduce and/or eliminate any potential detrimental effect upon the setting kinetics of the hydraulic compositions, it is preferred that the dry mortar formulation comprises the hydraulic binder-free composition in an amount such that the dry mortar formulation comprises no more than 0.5%, more preferably no more than 0.1%, and still more preferably no more than 0.05%, based on the total dry weight of the formulation, of surfactant(s) according to Formula I. At the same time it is preferred that the dry mortar formulations comprise at least 0.00001%, more preferably at least 0.0001% and still more preferably at least 0.001%, based on the total dry weight of the formulation, of surfactant(s) according to Formula I.

It is believed that the hydraulic binder free composition of the first aspect of the present invention may be advantageously incorporated into any dry mortar formulation comprising a hydraulic binder. However, according to a first preferred aspect of the invention, the dry mortar formulation is a grout formulation. In a second, equally preferred aspect, the dry mortar formulation is a cement based tile adhesive formulation. In a third, equally preferred aspect, the dry mortar formulation is a cementitious adhesive or coating formulation for exterior insulation finishing systems (EIFS) and/or External Thermal Insulation Composite Systems (ETICS).

Some embodiments of the invention shall now be further described by way of exemplification only. All ratios, parts and percentages are expressed by dry weight unless otherwise specified, and all components are of good commercial quality unless otherwise specified.

## Examples

The performance of cementitious dry mix formulations according to the present invention has been studied by comparing cement based tile adhesive (CBTA), tile grout and ETICS base coat adhesive/reinforcement coat formulations in the presence and absence of various surfactant compounds. Further, the suitability of an RDP as a vehicle by which small amounts of surfactant compounds may be incorporated into dry mix formulations was examined by monitoring the performance of dry mix formulations with and without substituting a portion of the RDP, with such surfactants.

## Cement composition preparation

Throughout the examples, the required quantity of each cement composition (CBTA, ETICS adhesive or tile grout) was prepared by combining a measured amount of the homogenous dry mortar with a measured amount of water and mixing by hand. In each case, the water-solids-factor ("$\frac{W}{S}$") was calculated as follows:

$$\frac{W}{S} = \frac{\text{initial quantity of water (g)}}{\text{quantity of modified dry mortar (g)}}$$

## Evaluation of setting time

The overall setting time of various cement compositions were determined using an automated Penetrometer (Dettki AVM-14-PNS), supplied by Dettki Messautomatisierung, 78736 Epfendorf/ Germany. At the commencement of each test, cement compositions were prepared by pouring the required amount of water into a mixing vessel before gradually adding 400g of the homogenous dry mortar and stirring by hand for 1 minute. Upon completion of the mixing

process, the cement composition was then transferred into a polystyrene cup having an internal diameter of 93mm and a height of 38mm, taking care to avoid entrapping air within the composition, and the filled cup is then placed on a vibrating table to compress the mixture. Once the mixture has been subjected to 15 cycles of the compressive force, a smooth horizontal surface is then prepared in the cement composition by scraping away any excess cement composition using a spatula in a sawing motion. A border comprising 5mm deep layer of cement composition is then applied to the outer circumference of the smoothed surface to provide a liquid tight seal, and a layer of liquid paraffin is placed above the smooth cement composition surface to suppress skin formation and prevent the cement composition from sticking to the testing needle during analysis. The samples are then placed into the penetrometer for automated analysis, with setting times being calculated from a notional start point at which mixing was initiated. During the testing procedure, the time at which needle penetration is limited to a depth 36mm is recorded as the setting "start" time with the time at which the needle penetration is limited to a depth of 2mm being recorded as the setting "end" time. By simple subtraction of the recorded start value from the recorded end value, a setting duration is calculated.

**Example 1: RDP Compositions**

The following RDP compositions were prepared as shown below in Table 1. In each example, an aqueous dispersion comprising either a polyvinyl acrylate or a vinyl acetate-ethylene film forming copolymer was prepared and, where required combined with an aqueous solution comprising from 0.06 to 1.0wt.%, based on the total dry weight of the emulsion polymer, of an additive selected from: Calcium Formate (CaF), which is a conventional cement additive known to provide an increase in hardness and a decrease in setting time; Agitan™P 803 which is a commercially available defoamer (Munzing, Germany); Loxanol™K12P which is a commercially available air entraining agent or coalescent (BASF, Germany); sodium dioctyl sulfosuccinate (DOSS); and sodium dihexyl sulfosuccinate (DHSS). The resultant mixture was then spray dried in the presence of a colloidal stabilizer and anti-caking agent as is conventional in the art of RDP preparation.

**Table** 1

| (exam ples 1.9 and 1.10 are not according to the invention) | | |
|---|---|---|
| **Example** | **RDP (wt.%)** | **Additives (wt.%)** |
| 1.1 (Comparative) | vinyl acetate-ethylene (100 wt.%) | - |
| 1.2 (Comparative) | polyvinyl acrylate (100 wt.%) | - |
| 1.3. (Comparative) | vinyl acetate-ethylene (99 wt.%) | CaF (1wt.%) |
| 1.4 | vinyl acetate-ethylene (99.94 wt.%) | DOSS (0.06 wt.%) |
| 1.5 | vinyl acetate-ethylene (99.75 wt.%) | DOSS (0.25 wt.%) |
| 1.6 | vinyl acetate-ethylene (99.5 wt.%) | DOSS (0.50 wt.%) |
| 1.7 | vinyl acetate-ethylene (99.25 wt.%) | DOSS (0.75 wt.%) |
| 1.8 | vinyl acetate-ethylene (99 wt.%) | DOSS (1.0 wt.%) |
| 1.9 | vinyl acetate-ethylene (99.5 wt.%) | DHSS (0.5 wt.%) |
| 1.10 | vinyl acetate-ethylene (99 wt.%) | DHSS (1.0 wt.%) |
| 1.11 | vinyl acetate-ethylene (99.937 wt.%) | Agitan™ P 803 (0.063 wt.%) |
| 1.12 | vinyl acetate-ethylene (99.937 wt.%) | DOSS (0.063 wt.%) |
| 1.13 | vinyl acetate-ethylene (99.9 wt.%) | DOSS (0.1 wt.%) |
| 1.14 | vinyl acetate-ethylene (99.85 wt.%) | DOSS (0.15 wt.%) |
| 1.15 | vinyl acetate-ethylene (99.75 wt.%) | DOSS (0.25 wt.%) |
| 1.16 | vinyl acetate-ethylene (99.85 wt.%) | DOSS (0.1 wt.%) / Loxanol™K12P (0.05 wt.%) |
| 1.17 | vinyl acetate-ethylene (99.78 wt.%) | DOSS (0.15 wt.%) / Loxanol™ K12P (0.07 wt.%) |
| 1.18 | vinyl acetate-ethylene (99.66 wt.%) | DOSS (0.25 wt.%) / Loxanol™ K12P (0.19 wt.%) |

**Example 2: Cement based Tile Adhesive (CBTA)**

The performance of CBTA compositions according to the invention was studied by comparing various formulations comprising the RDPs of Example 1. In each test, a CBTA formulation was prepared comprising: 35.0 wt.% Ordinary Portland Cement CEM I 52.5 R (Milke, Germany); 31.05 wt.% Quartz sand F32 (Quarzwerke Frechen, Germany); 31.05 wt.% Quartz sand F36 (Quarzwerke Frechen, Germany), 0.4 wt.% hydroxyethylmethylcellulose ether, i.e. Walocel™ MTW 8000 PF 10 (Dow Wolff Cellulosics, Germany); and 2.5 wt.% of an RDP according to Example 1.

As shown in Table 2 below, the water-solid factor $(\frac{W}{S})$, setting time, tensile adhesive strength (measured according to EN 1348) and open time (measured according to EN 1346) were recorded for CBTA compositions comprising each of the RDP compositions of Example 1.1 to 1.10.

**Table 2**

| (examples 2.9 and 2.10 are not according to the invention) | | | | | | | | | | |
|---|---|---|---|---|---|---|---|---|---|---|
| | Comparative Examples | | | Inventive Examples | | | | | | |
| Example | 2.1 | 2.2 | 2.3 | 2.4 | 2.5 | 2.6 | 2.7 | 2.8 | 2.9 | 2.10 |
| RDP | 1.1 | 1.2 | 1.3 | 1.4 | 1.5 | 1.6 | 1.7 | 1.8 | 1.9 | 1.10 |
| $\frac{W}{S}$ | 0.215 | 0.210 | 0.215 | 0.215 | 0.215 | 0.215 | 0.220 | 0.225 | 0.215 | 0.220 |
| Setting Time: | | | | | | | | | | |
| Initial (min) | 728 | 732 | 728 | 689 | 667 | 615 | 606 | 639 | 650 | 610 |
| Final (min) | 827 | 823 | 832 | 790 | 770 | 700 | 696 | 714 | 736 | 691 |
| Total (min) | 99 | 91 | 104 | 101 | 103 | 85 | 63 | 75 | 86 | 81 |
| Adhesive Strength: ($N/mm^2$) | | | | | | | | | | |
| Normal climate | 1.62 | 1.38 | 1.16 | 1.68 | 1.71 | 1.85 | 1.72 | 1.76 | 1.52 | 1.57 |
| Water immersion | 1.38 | 1.45 | 1.25 | 1.59 | 1.72 | 1.69 | 1.73 | 1.69 | 1.67 | 1.55 |
| Heat Storage | 1.43 | 1.21 | 0.96 | 1.65 | 1.95 | 1.49 | 1.47 | 1.07 | 1.27 | 1.06 |
| Open time ($N/mm^2$): | | | | | | | | | | |
| 20 min | 1.12 | 1.06 | 1.27 | 1.32 | 0.96 | 0.52 | 0.57 | 0.65 | 0.18 | 0.82 |
| 30 min | 0.47 | 0.54 | 0.72 | 0.91 | 0.30 | 0.06 | 0.00 | 0.00 | 0.14 | 0.00 |

The results clearly indicate that, by providing a RDP comprising from 0.06 to 1.0 wt.% of a surfactant of the present invention, i.e. sodium dioctyl sulfosuccinate or sodium dihexyl sulfosuccinate, an improvement in adhesive strength is observed upon combination of such an RDP into CBTA formulations in comparison with CBTA formulations comprising conventional RDPs or RDPs comprising similar levels of a conventional additive.

**Example 3 CBTA**

The performance of additional CBTA compositions according to the invention was studied by comparing various formulations comprising the RDPs of Example 1. In each test, a CBTA formulation was prepared comprising: 30.0 wt.% Ordinary Portland Cement CEM I 52.5 R (Milke, Germany); 67.1 wt.% Silica sand F34 (Quarzwerke Frechen, Germany); 0.4 wt.% hydroxyethylmethylcellulose ether, i.e. Walocel™ MW 4000 PF V (Dow Wolff Cellulosics, Germany); and 2.5 wt.% of an RDP according to Example 1.

As shown in Table 3 below, the water-solid factor $(\frac{W}{S})$, setting time (determined using the Vicat-needle-test according to DIN EN 196), adhesion strength (measured according to EN 1348) and open time (measured according to EN 1346) were recorded for CBTA compositions comprising each of the RDP compositions of Example 1.13 to 1.18. In addition, the workability of the formulations were visually inspected and allocated a workability rating of from 1 (excellent) to 5 (extremely poor).

**Table 3**

| | Comparative Example | Inventive Examples | | | | | |
|---|---|---|---|---|---|---|---|
| Example | 3.1 | 3.2 | 3.3 | 3.4 | 3.5 | 3.6 | 3.7 |
| RDP | 1.1 | 1.13 | 1.14 | 1.15 | 1.16 | 1.17 | 1.18 |
| $\frac{W}{S}$ | 0.215 | 0.215 | 0.210 | 0.210 | 0.215 | 0.210 | 0.210 |
| Setting Time:<br>Initial (min)<br>Final (min)<br>Total (min) | <br>734<br>852<br>118 | <br>715<br>864<br>149 | <br>700<br>842<br>142 | <br>649<br>783<br>134 | <br>727<br>790<br>63 | <br>730<br>790<br>60 | <br>668<br>765<br>97 |
| Adhesive Strength: ($N/mm^2$)<br>Normal climate<br>Water immersion<br>Heat Storage | <br>1.20<br>0.95<br>0.99 | <br>1.76<br>1.37<br>1.32 | <br>1.32<br>0.99<br>1.26 | <br>1.73<br>1.31<br>1.58 | <br>1.63<br>1.19<br>1.42 | <br>1.48<br>1.06<br>1.29 | <br>1.60<br>1.19<br>1.49 |
| Open time: ($N/mm^2$)<br>20 min | <br>0.59 | <br>0.64 | <br>0.95 | <br>0.85 | <br>1.02 | <br>0.76 | <br>0.98 |
| Workability rating | 2 | 2 | 3-4 | 5 | 2 | 3 | 3 |

These results again indicate that CBTA formulations of the present invention demonstrate an increase in adhesive strength. Further, when the RDP comprised at least 0.15 wt.% DOSS, an improvement in open time was also observed. Further, although it appears that the incorporation of DOSS into the RDP at levels above 0.15wt.% may lead to a reduction in workability of the CBTA formulation, it is evident that such a reduction in workability may be offset by the incorporation of the air entraining agent Loxanol™ K12P. Therefore, in formulations where good workability is required, it is preferred that the RDP composition includes such an air entraining agent along with the required surfactant.

**Example 4 ETICS Adhesive**

To demonstrate that the benefit observed upon incorporation of the RDP compositions of the present invention is not limited to CBTA formulations, the performance of ETICS adhesive formulations according to the invention was studied by comparing various formulations comprising the RDPs of Example 1. In each test, a ETICS adhesive formulation was prepared comprising: 25.0 wt.% Ordinary Portland Cement CEM I 42.5 R (Holcim, Germany); 15.0 wt.% silica sand F36 (Quarzwerke Frechen, Germany); 47.29 wt.% Silica sand FH31 (Quarzwerke Frechen, Germany); 10.0 wt.% Jura White CC902 (Omya, Germany); 0.1 wt.% laurylethersulfate (Loxanol™ K 12, available from Cognis Germany); 0.2 wt.% cellulose ether, i.e. Methocel™ (Dow Construction Chemicals Inc); and 2.5 wt.% of an RDP according to Example 1.

As shown in Table 4 below, the water-solid factor $(\frac{W}{S})$, setting time, adhesion strength (measured according to EN 1348), and flexural, compression strength and water uptake (each of which were determined according to EN 12808-3) were recorded for CBTA compositions comprising each of the RDP compositions of Example 1.1, 1.11 and 1.12. In addition, the adhesive property of the formulations was visually inspected and allocated an adhesion rating of from 1 (excellent) to 6 (exceptionally poor).

**Table 4**

| | Comparative Examples | | Inventive Example |
|---|---|---|---|
| Example | 3.1 | 3.2 | 3.3 |
| RDP | 1.1 | 1.11 | 1.12 |
| $\frac{W}{S}$ | 20.5 | 20.5 | 20.5 |

(continued)

| | | | |
|---|---|---|---|
| Setting Time:<br>Initial (min)<br>Final (min)<br>Total (min) | <br>701<br>808<br>107 | <br>639<br>802<br>163 | <br>488<br>617<br>129 |
| Adhesion Strength ($N/mm^2$)<br>Normal climate<br>(adhesion rating)<br>Water immersion<br>(adhesion rating) | <br>0.11<br>4.0<br>0.04<br>6.0 | <br>0.10<br>3.0<br>0.03<br>6.0 | <br>0.12<br>1.0<br>0.03<br>6.0 |
| Flexural Strength ($N/mm^2$) | 2.7 | 3.5 | 4.7 |
| Compression Strength ($N/mm^2$) | 7.7 | 8.8 | 13.3 |
| Water uptake ($g/cm^2$)<br>After 30 min<br>After 240 min | <br>0.40<br>0.86 | <br>0.31<br>0.60 | <br>0.05<br>0.08 |

These results clearly indicate that an ETICS adhesive formulation according to the present invention provides an improvement in adhesive strength, flexural strength and compression strength over ETICS adhesive formulations comprising conventional RDPs. In addition, it is noted that the ETICS adhesive formulation of the invention also provided a decreased water uptake in comparison to the conventional RDP-containing formulations.

**Example 5 Tile Grouts**

To demonstrate that the benefit observed upon incorporation of surfactants according to Formula I as defined above is not limited to CBTA and/or ETICS adhesive formulations, the performance of various tile grout formulations comprising a range surfactant compounds was analysed. For each test, a tile grout was prepared comprising: 30.0 wt.% Ordinary Portland Cement CEM I 42.5 R (Holcim, Germany); 2.0 wt.% high alumina cement (Secar™51, available from Kerneos, France); 15.0 wt.% Silica sand FH31 (Quarzwerke Frechen, Germany); 2 wt.% RDP (DLP2000); 10.0 wt.% calcium carbonate (Jura White™CC902, Omya, Germany); 0.3 wt.%; superplasticizer (Melment™F10, available from BASF, Germany); 0.1 wt.% hydroxyethylmethylcellulose ether, i.e. Walocel™ MTW 2000, available from Dow Wolff Cellulosics; and 0.05 to 0.8 wt.% of a surfactant as identified in Table 5 below; with the remainder of the formulation comprising F34 silica sand (Quarzwerke Frechen, Germany).

**Table 5**

| (examples 5.1, 5.7, 5.8 as well as 5.10 and 5.11 are not according to the invention) | |
|---|---|
| **Example** | **Surfactant** |
| 5.1 | 0.2 wt.% Sodium Oleate[1] |
| 5.2 | 0.05 wt.% sodium dioctyl sulfosuccinate[2] |
| 5.3 | 0.1 wt.% sodium dioctyl sulfosuccinate[2] |
| 5.4 | 0.2 wt.% sodium dioctyl sulfosuccinate[2] |
| 5.5 | 0.4 wt.% sodium dioctyl sulfosuccinate[2] |
| 5.6 | 0.8 wt.% sodium dioctyl sulfosuccinate[2] |
| 5.7 | 0.2 wt.% sodium diisobutyl sulfosuccinate[3] |
| 5.8 | 0.2 wt.% sulfosuccinate monoester[4] |
| 5.9 | 0.2 wt.% sodium dioctyl sulfosuccinate/sodium benzoate[5] |
| 5.10 | 0.2 wt.% sodium dicyclohexyl sulfosuccinate[6] |

(continued)

| (examples 5.1, 5.7, 5.8 as well as 5.10 and 5.11 are not according to the invention) | |
|---|---|
| **Example** | **Surfactant** |
| 5.11 | 0.2 wt.% succininc acid disodium salt[7] |
| [1]97% powder supplied by Sigma-Aldrich, Germany; 100% waxy solid supplied by Intatrade, Germany; [3] liquid composition commercially available from Cytec Industries USA as Aerosol IB-45; [4] liquid composition commercially available from Cytec Industries USA as Aerosol EF-810; [5] blend of sodium dioctyl sulfosuccinate and sodium benzoate commercially available in powdered form by Cytec Industries USA as Aerosol OTB-B; liquid composition commercially available from Cytec Industries USA as Aerosol A-196-97; [7] >99% powder supplied by Sigma-Aldrich, Germany | |

As shown in Table 6 below, the water-solid factor $(\frac{W}{S})$, flexural strength and compressive strength (each measured according to EN 12808-3), and setting time (measured according to CE 94.1) were recorded for the tile grout formulations of Examples 5.1 to 5.11. In addition, the workability of the formulations were visually inspected and allocated a workability rating of from 1 (excellent) to 5 (extremely poor).

**Table 6**

| (examples 5.1, 5.7, 5.8 as well as 5.10 and 5.11 are not according to the invention) | | | | | | | | | | | |
|---|---|---|---|---|---|---|---|---|---|---|---|
| **Example** | **5.1** | **5.2** | **5.3** | **5.4** | **5.5** | **5.6** | **5.7** | **5.8** | **5.9** | **5.10** | **5.11** |
| $\frac{W}{S}$ | 0.17 | 0.17 | 0.17 | 0.17 | 0.17 | 0.17 | 0.17 | 0.17 | 0.17 | 0.17 | 0.17 |
| Flexural Strength ($N/mm^2$) | | | | | | | | | | | |
| 24h | 1.9 | 3.9 | 3.9 | 4.2 | 3.9 | 2.9 | 2.4 | 2.4 | 3.3 | 2.9 | 2.4 |
| 7d | 5.7 | 8.5 | 8.0 | 7.3 | 7.1 | 6.9 | 6.6 | 5.8 | 7.1 | 7.0 | 6.2 |
| 28d | 7.4 | 9.9 | 9.7 | 11.3 | 10.8 | 10.7 | 8.8 | 8.1 | 10.5 | 9.3 | 7.7 |
| Compressive Strength ($N/mm^2$) | | | | | | | | | | | |
| 24h | 5.2 | 15.7 | 16.1 | 16.6 | 15.4 | 10.6 | 9.7 | 8.1 | 14.1 | 14.7 | 7.9 |
| 7 d | 11.4 | 20.8 | 21.8 | 20.0 | 20.0 | 18.7 | 15.3 | 12.7 | 19.1 | 18.1 | 13.5 |
| 28 d | 17.1 | 22.0 | 22.0 | 30.7 | 27.4 | 27.6 | 18.0 | 16.8 | 26.1 | 24.7 | 19.8 |
| Setting Time (min) | | | | | | | | | | | |
| Initial | 60 | 309 | 366 | 372 | 470 | 611 | 153 | 462 | 389 | 89 | 67 |
| Final | 83 | 340 | 378 | 382 | 520 | 747 | 260 | 540 | 459 | 110 | 89 |
| Total | 23 | 31 | 12 | 10 | 50 | 136 | 107 | 78 | 70 | 21 | 22 |
| Workability Rating | 2 | 3 | 3 | 3 | 3 | 3 | 2.5 | 1.5 | 4 | 1.5 | 2.0 |

These results indicate that mortar formulations comprising surfactants according to Formula I as defined above, in particular sodium dioctyl sulfosuccinate (DOSS), when present in an amount no more than 1 wt.%, based on the dry weight of the mortar composition, provides a surprising increase in mechanical strength (e.g. flexural, compressive and/or adhesive strength). Furthermore, although the addition of such surfactants may reduce the setting kinetics of the mortar compositions, by limiting the surfactant concentration to no more than 1 wt.%, acceptable setting times can be achieved.

## Claims

**1.** A hydraulic binder-free composition for use as a modifying additive in a hydraulic setting mixture, said composition comprising

a. one or more water redispersible polymer powder (RDP); and

b. one or more surfactants chosen from a dioctyl sulfosuccinate salt;

wherein the weight ratio of said RDP to said surfactant(s) is from 99:1 to 9999:1.

**2.** The composition according to claim 1, wherein said RDP comprises one or more compounds selected from homopolymers, copolymers and/or terpolymers of one or more monomers selected from the group of vinyl esters of unbranched or branched $C_{1-15}$ alkycarboxylic acids, (meth)acrylic esters of $C_{1-15}$ alcohols, vinylaromatics, olefins, dienes and vinyl halogenides.

**3.** The composition according to claim 1, further comprising one or more stabilizers selected from lime, air entraining agents, coalescents, superplasticizers, rheological modifiers and mixtures thereof.

**4.** A process for producing a hydraulic binder-free composition for use as a modifying additive in a hydraulic setting mixture, said process comprising:

a. providing one or more RDP;
b. providing a composition comprising one or more surfactants chosen from a dioctyl sulfosuccinate salt; and
c. combining an amount of the RDP of step a) with an amount of the composition of step b) such that the weight ratio of said RDP to said surfactant(s) is from 99:1 to 9999:1.

**5.** The process according to claim 4, said process comprising drying an aqueous composition comprising a dispersion of an emulsion polymer, wherein said aqueous composition further comprises one or more surfactants chosen from a dioctyl sulfosuccinate salt;
in an amount such that the weight ratio of said emulsion polymer to said surfactant(s) is from 99:1 to 9999:1.

**6.** A modified dry mortar formulation which may be combined with water to form a hydraulic setting mixture, wherein said modified dry mortar comprises:

a. a dry mortar formulation comprising hydraulic binder; and
b. from 0.3 to 50%, based on the total dry weight of the modified hydraulic mortar formulation, of a composition according to claim 1,

wherein said modified dry mortar formulation comprises no more than 1%, based on the total dry weight of the modified dry mortar formulation, of surfactants according to Formula 1

$$MSO_3\text{-}R^1\text{-}(\text{-}COOR^2)_n \qquad \text{(Formula I)}$$

wherein M represents a hydrogen, metal or ammonium cation; $R^1$ represents a linear or branched, saturated or unsaturated $C_{1-10}$ alkylene moiety which is optionally substituted with one or more hydroxyl, halogen, nitro and/or cyano groups; each $R^2$ independently represents a linear or branched, saturated or unsaturated $C_{1-22}$ alkyl radical or a hydrogen, metal or ammonium cation; and n represents an integer from 1 to 10.

**7.** The formulation of claim 6, which is a grout, cement-based tile adhesive, or a cementitious adhesive or coating formulation for an Exterior Insulation Finishing System, and/or an External Thermal Insulation Composite System.

**8.** The formulation of claim 7, further comprising one or more water soluble polysaccharide-derived water retention agents, preferably a water soluble cellulose ether.

**9.** A hydraulic setting mixture comprising a dry mortar formulation according to claim 6 and water.

**10.** A method of modifying a dry mortar formulation, said method comprising:

a. providing a dry mortar formulation comprising hydraulic binder;
b. providing a composition according to claim 1; and

combining the composition of step b) with the formulation of step a) to provide a modified dry mortar formulation comprising from 0.3 to 50%, based on the total dry weight of the modified hydraulic mortar formulation, of the composition of step b)provided that the resultant modified dry mortar formulation comprises no more than 1%, based

on the total dry weight of the modified dry mortar formulation, of surfactants according to Formula 1

$$MSO_3\text{-}R^1\text{-}(\text{-}COOR^2)_n \qquad \text{(Formula I)}$$

wherein M represents a hydrogen, metal or ammonium cation; $R^1$ represents a linear or branched, saturated or unsaturated $C_{1-10}$ alkylene moiety which is optionally substituted with one or more hydroxyl, halogen, nitro and/or cyano groups; each $R^2$ independently represents a linear or branched, saturated or unsaturated $C_{1-22}$ alkyl radical or a hydrogen, metal or ammonium cation; and n represents an integer from 1 to 10.

**11.** Use of the composition according to claim 1 as a modifying additive for a hydraulic binder-containing dry mortar formulation or a hydraulic setting mixture comprising such a dry mortar formulation.

**12.** Use of a composition according to claim 1 for increasing, once cured, the adhesive, flexural and/or compressive strength of a dry mortar formulation comprising hydraulic binder.

**Patentansprüche**

**1.** Eine hydraulische bindemittelfreie Zusammensetzung zur Verwendung als modifizierendes Additiv in einer hydraulischen Abbindemischung, wobei die Zusammensetzung Folgendes beinhaltet:

a. ein oder mehrere wasserredispergierbare Polymerpulver (RDP); und
b. ein oder mehrere Tenside, die aus einem Dioctylsulfosuccinatsalz gewählt sind;
wobei das Gewichtsverhältnis des RDP zu dem Tensid/den Tensiden 99 : 1 bis 9999 : 1 beträgt.

**2.** Zusammensetzung gemäß Anspruch 1, wobei das RDP eine oder mehrere Verbindungen beinhaltet, die ausgewählt sind aus Homopolymeren, Copolymeren und/oder Terpolymeren eines oder mehrerer Monomere, die ausgewählt sind aus der Gruppe von Vinylestern unverzweigter oder verzweigter $C_{1-15}$-Alkycarbonsäuren, (Meth)acrylestern von $C_{1-15}$-Alkoholen, Vinylaromaten, Olefinen, Dienen und Vinylhalogeniden.

**3.** Zusammensetzung gemäß Anspruch 1, die ferner einen oder mehrere Stabilisatoren beinhaltet, die ausgewählt sind aus Kalk, Luftporenbildnern, Koaleszenzmitteln, Fließmitteln, rheologischen Modifikatoren und Mischungen davon.

**4.** Ein Prozess zum Herstellen einer hydraulischen bindemittelfreien Zusammensetzung zur Verwendung als modifizierendes Additiv in einer hydraulischen Abbindemischung, wobei der Prozess Folgendes beinhaltet:

a. Bereitstellen eines oder mehrerer RDP;
b. Bereitstellen einer Zusammensetzung, die ein oder mehrere Tenside beinhaltet, die aus einem Dioctylsulfosuccinatsalz gewählt sind; und
c. Kombinieren einer Menge des RDP von Schritt a) mit einer Menge der Zusammensetzung von Schritt b), sodass das Gewichtsverhältnis des RDP zu dem Tensid/den Tensiden von 99 : 1 bis 9999 : 1 beträgt.

**5.** Prozess gemäß Anspruch 4, wobei der Prozess das Trocknen einer wässrigen Zusammensetzung beinhaltet, die eine Dispersion eines Emulsionspolymers beinhaltet, wobei die wässrige Zusammensetzung ferner ein oder mehrere Tenside beinhaltet, die aus einem Dioctylsulfosuccinatsalz gewählt sind;
in einer Menge, sodass das Gewichtsverhältnis des Emulsionspolymers zu dem Tensid/den Tensiden 99 : 1 bis 9999 : 1 beträgt.

**6.** Eine modifizierte Trockenmörtelformulierung, die mit Wasser kombiniert werden kann, um eine hydraulische Abbindemischung zu bilden, wobei der modifizierte Trockenmörtel Folgendes beinhaltet:

a. eine Trockenmörtelformulierung, die ein hydraulisches Bindemittel beinhaltet; und
b. zu 0,3 bis 50 %, bezogen auf das Gesamttrockengewicht der modifizierten
hydraulischen Mörtelformulierung, eine Zusammensetzung gemäß Anspruch 1, wobei die modifizierte Trockenmörtelformulierung zu nicht mehr als 1 %, bezogen auf das Gesamttrockengewicht der modifizierten Trockenmörtelformulierung, Tenside gemäß Formel 1 beinhaltet

$$MSO_3\text{-}R^1\text{-}(\text{-}COOR^2)_n \qquad \text{(Formel I)}$$

wobei M ein Wasserstoff-, Metall- oder Ammoniumkation darstellt; $R^1$ einen linearen oder verzweigten, gesättigten oder ungesättigten $C_{1-10}$-Alkylenmolekülteil darstellt, der optional mit einer oder mehreren Hydroxyl-, Halogen-, Nitro- und/oder Cyanogruppen substituiert ist; jeder $R^2$ unabhängig ein lineares oder verzweigtes, gesättigtes oder ungesättigtes $C_{1-22}$-Alkylradikal oder ein Wasserstoff-, Metall- oder Ammoniumkation darstellt; und n eine ganze Zahl von 1 bis 10 darstellt.

**7.** Formulierung gemäß Anspruch 6, die ein Fugenmörtel, ein Fliesenhaftmittel auf Zementbasis oder ein zementhaltiges Haftmittel oder eine Beschichtungsformulierung für ein Außenisolations-Endbearbeitungssystem und/oder ein externes Wärmedämmungs-Verbundsystem ist.

**8.** Formulierung gemäß Anspruch 7, die ferner ein oder mehrere wasserlösliche, von Polysacchariden abgeleitete Wasserretentionsmittel, vorzugsweise einen wasserlöslichen Celluloseether, beinhaltet.

**9.** Eine hydraulische Abbindemischung, die eine Trockenmörtelformulierung gemäß Anspruch 6 und Wasser beinhaltet.

**10.** Ein Verfahren zum Modifizieren einer Trockenmörtelformulierung, wobei das Verfahren Folgendes beinhaltet:

a. Bereitstellen einer Trockenmörtelformulierung, die ein hydraulisches Bindemittel beinhaltet;
b. Bereitstellen einer Zusammensetzung gemäß Anspruch 1; und
Kombinieren der Zusammensetzung von Schritt b) mit der Formulierung von Schritt a), um eine modifizierte Trockenmörtelformulierung bereitzustellen, die zu 0,3 bis 50 %, bezogen auf das Gesamttrockengewicht der modifizierten hydraulischen Mörtelformulierung, die Zusammensetzung von Schritt b) beinhaltet, vorausgesetzt, dass die resultierende modifizierte Trockenmörtelformulierung zu nicht mehr als 1 %, bezogen auf das Gesamttrockengewicht der modifizierten Trockenmörtelformulierung, Tenside gemäß Formel 1 beinhaltet,

$$MSO_3\text{-}R^1\text{-}(\text{-}COOR^2)_n \qquad \text{(Formel I)}$$

wobei M ein Wasserstoff-, Metall- oder Ammoniumkation darstellt; $R^1$ einen linearen oder verzweigten, gesättigten oder ungesättigten $C_{1-10}$-Alkylenmolekülteil darstellt, der optional mit einer oder mehreren Hydroxyl-, Halogen-, Nitro- und/oder Cyanogruppen substituiert ist; jeder $R^2$ unabhängig ein lineares oder verzweigtes, gesättigtes oder ungesättigtes $C_{1-22}$-Alkylradikal oder ein Wasserstoff-, Metall- oder Ammoniumkation darstellt; und n eine ganze Zahl von 1 bis 10 darstellt.

**11.** Verwendung der Zusammensetzung gemäß Anspruch 1 als modifizierendes Additiv für eine hydraulische bindemittelhaltige Trockenmörtelformulierung oder eine hydraulische Abbindemischung, die eine solche Trockenmörtelformulierung beinhaltet.

**12.** Verwendung einer Zusammensetzung gemäß Anspruch 1 zum Erhöhen, nach dem Aushärten, der Haft-, Biege- und/oder Druckfestigkeit einer Trockenmörtelformulierung, die ein hydraulisches Bindemittel beinhaltet.

## Revendications

**1.** Une composition dépourvue de liant hydraulique pour une utilisation en tant qu'additif de modification dans un mélange à prise hydraulique, ladite composition comprenant

a. une ou plusieurs poudres de polymère redispersables (RDP) dans l'eau ; et
b. un ou plusieurs tensioactifs choisis dans un sel de sulfosuccinate de dioctyle ;
dans laquelle le rapport en poids de ladite RDP audit ou auxdits tensioactif(s) va de 99/1 à 9 999/1.

**2.** La composition selon la revendication 1, dans laquelle ladite RDP comprend un ou plusieurs composés sélectionnés parmi des homopolymères, des copolymères et/ou des terpolymères d'un ou de plusieurs monomères sélectionnés dans le groupe d'esters vinyliques d'acides alkycarboxyliques en $C_{1-15}$ non ramifiés ou ramifiés, d'esters (méth)acryliques d'alcools en $C_{1-15}$, de vinylaromatiques, d'oléfines, de diènes et d'halogénures vinyliques.

**3.** La composition selon la revendication 1, comprenant en outre un ou plusieurs stabilisants sélectionnés parmi de la

chaux, des agents entraîneur d'air, des coalescents, des superplastifiants, des modificateurs de rhéologie et des mélanges de ceux-ci.

**4.** Un procédé pour produire une composition dépourvue de liant hydraulique pour une utilisation en tant qu'additif de modification dans un mélange à prise hydraulique, ledit procédé comprenant :

a. le fait de fournir une ou plusieurs RDP ;
b. le fait de fournir une composition comprenant un ou plusieurs tensioactifs choisis dans un sel de sulfosuccinate de dioctyle ; et
c. le fait de combiner une quantité de la RDP de l'étape a) avec une quantité de la composition de l'étape b) de telle sorte que le rapport en poids de ladite RDP audit ou auxdits tensioactif(s) va de 99/1 à 9 999/1.

**5.** Le procédé selon la revendication 4, ledit procédé comprenant le fait de sécher une composition aqueuse comprenant une dispersion d'un polymère en émulsion, ladite composition aqueuse comprenant en outre un ou plusieurs tensioactifs choisis dans un sel de sulfosuccinate de dioctyle ;
en une quantité de telle sorte que le rapport en poids dudit polymère en émulsion audit ou auxdits tensioactif(s) va de 99/1 à 9 999/1.

**6.** Une formulation de mortier sec modifié qui peut être combinée avec de l'eau afin de former un mélange à prise hydraulique, ledit mortier sec modifié comprenant :

a. une formulation de mortier sec comprenant un liant hydraulique ; et
b. de 0,3 à 50 %, rapporté au poids sec total de la formulation de mortier hydraulique modifié, d'une composition selon la revendication 1,
ladite formulation de mortier sec modifié ne comprenant pas plus de 1 %, rapporté au poids sec total de la formulation de mortier sec modifié, de tensioactifs selon la Formule 1

$$MSO_3\text{-}R^1\text{-}(\text{-}COOR^2)_n \qquad \text{(Formule I)}$$

dans laquelle M représente un cation d'hydrogène, de métal ou d'ammonium ; $R^1$ représente un groupement alkylène en $C_{1-10}$ linéaire ou ramifié, saturé ou insaturé qui est facultativement substitué par un ou plusieurs groupes hydroxyle, halogène, nitro et/ou cyano ; chaque $R^2$ représente indépendamment un radical alkyle en $C_{1-22}$ linéaire ou ramifié, saturé ou insaturé ou un cation d'hydrogène, de métal ou d'ammonium ; et n représente un nombre entier allant de 1 à 10.

**7.** La formulation de la revendication 6, laquelle est un coulis, une colle pour carrelage à base de ciment, ou une colle cimentaire ou une formulation de revêtement pour un système de finition d'isolation extérieure, et/ou un système de composite d'isolation thermique externe.

**8.** La formulation de la revendication 7, comprenant en outre un ou plusieurs agents de rétention d'eau dérivés de polysaccharide solubles dans l'eau, de préférence un éther de cellulose soluble dans l'eau.

**9.** Un mélange à prise hydraulique comprenant une formulation de mortier sec selon la revendication 6 et de l'eau.

**10.** Une méthode de modification d'une formulation de mortier sec, ladite méthode comprenant :

a. le fait de fournir une formulation de mortier sec comprenant un liant hydraulique ;
b. le fait de fournir une composition selon la revendication 1 ; et
le fait de combiner la composition de l'étape b) avec la formulation de l'étape a) afin de fournir une formulation de mortier sec modifié comprenant de 0,3 à 50 %, rapporté au poids sec total de la formulation de mortier hydraulique modifié, de la composition de l'étape b) à condition que la formulation de mortier sec modifié résultante ne comprenne pas plus de 1 %, rapporté au poids sec total de la formulation de mortier sec modifié, de tensioactifs selon la Formule 1

$$MSO_3\text{-}R^1\text{-}(\text{-}COOR^2)_n \qquad \text{(Formule I)}$$

dans laquelle M représente un cation d'hydrogène, de métal ou d'ammonium ; $R^1$ représente un groupement alkylène en $C_{1-10}$ linéaire ou ramifié, saturé ou insaturé qui est facultativement substitué par un ou plusieurs

groupes hydroxyle, halogène, nitro et/ou cyano ; chaque $R^2$ représente indépendamment un radical alkyle en $C_{1-22}$ linéaire ou ramifié, saturé ou insaturé ou un cation d'hydrogène, de métal ou d'ammonium ; et n représente un nombre entier allant de 1 à 10.

**11.** Utilisation de la composition selon la revendication 1 en tant qu'additif de modification pour une formulation de mortier sec contenant un liant hydraulique ou un mélange à prise hydraulique comprenant une telle formulation de mortier sec.

**12.** Utilisation d'une composition selon la revendication 1 pour augmenter, une fois durcie, la force d'adhésion, la résistance à la flexion et/ou la résistance à la compression d'une formulation de mortier sec comprenant le liant hydraulique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070037925 A
- US 20070129486 A
- US 5959017 A
- EP 1184406 A
- EP 1498446 A1


### Non-patent literature cited in the description


- *Bulletin of the American Physical Society,* 1956, vol. 1 (3), 123
- Polymer Handbook. Interscience Publishers, 1966